# FASCICULE DE BREVET EUROPEEN

(11) **EP 2 221 727 B1**
(45) Date de publication et mention de la délivrance du brevet: **15.01.2020**
(21) Numéro de dépôt: 10153274.5
(22) Date de dépôt: 11.02.2010
(51) Int. Cl.: G06F 13/28, G06F 1/32, G06F 13/40, G06T 1/20, G06F 9/38, H04N 5/21

(54) **Système et procédé de traîtement de données numériques**
Vorrichtung und Verfahren zum Verarbeiten von digitalen Daten
System and method for processing digital data

(30) Priorité: 18.02.2009 FR 0951066
(43) Date de publication de la demande: 25.08.2010
(73) Titulaire: STMicroelectronics (Grenoble 2) SAS, 38000 Grenoble (FR)
(72) Inventeur: Cauchy, Xavier, 38190 Sainte Agnes (FR); Philippe, Anthony, 38000 Grenoble (FR); Faugeras, Isabelle, 38140 La Murette (FR); Siron, Didier, 38160 Chevrières (FR)
(74) Mandataire: Delprat, Olivier

(56) Documents cités:
- EP-A- 1 860 571
- US-A- 6 029 239
- US-B1- 6 209 078
- JU-HO SOHN ET AL: "Design and Test of Fixed-point Multimedia Co-processor for Mobile Applications" DESIGN, AUTOMATION AND TEST IN EUROPE, 2006. DATE '06. PROCEEDINGS MUNICH, GERMANY 06-10 MARCH 2006, PISCATAWAY, NJ, USA,IEEE, vol. 2, 6 mars 2006 (2006-03-06), pages 1-5, XP010929548 ISBN: 978-3-9810801-1-7
- TELL E ET AL: "Implementation of a Programmable Baseband Processor", INTERNET CITATION, 1 June 2005 (2005-06-01), pages 1-3, XP002533645, Retrieved from the Internet: URL:http://www.da.isy.liu.se/pubs/erite/er ite-rvk05.pdf [retrieved on 2009-06-24]

## Description

L'invention concerne, de manière générale, le traitement de données numériques et se rapporte plus particulièrement au traitement de pixels d'images vidéo.

Mais on ne sort pas du cadre de l'invention lorsqu'un tel système et un tel procédé sont destinés au traitement de données numériques d'autre nature, par exemple de données audio.

Dans le cadre du traitement de pixels d'images vidéo, il arrive souvent que les données à traiter soient stockées dans des mémoires tampon puis soient récupérées pour subir des traitements numériques successifs.

Tel est en particulier le cas de la réduction de bruit temporel qui est utilisée pour réduire le bruit récursif temporel dans un signal vidéo bruité.

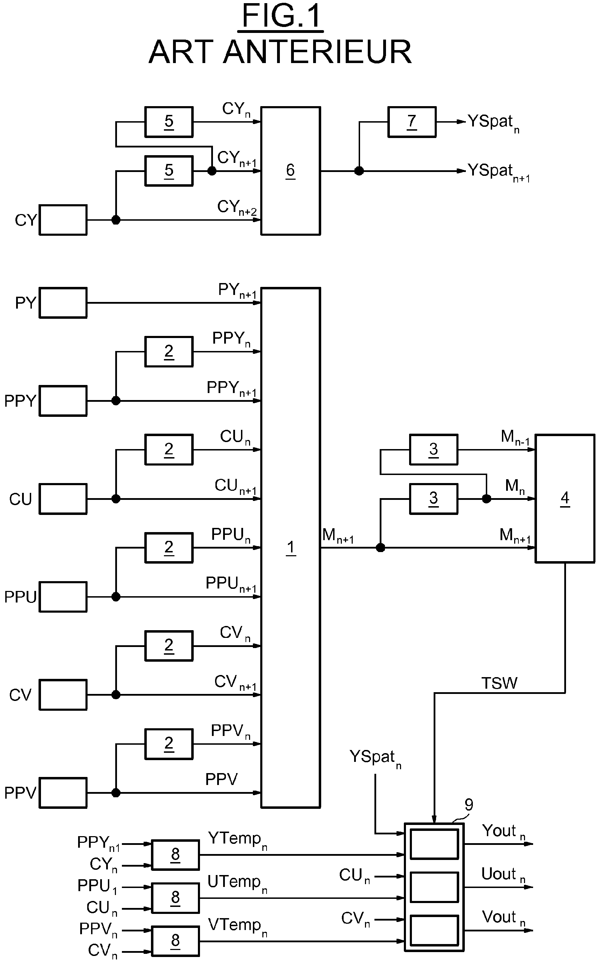

On a représenté sur la figure 1 un organigramme d'un tel procédé de réduction de bruit temporel.

Cet algorithme est essentiellement basé sur une interpolation spatiale et sur une interpolation temporelle des pixels. Un détecteur de mouvement est utilisé pour décider si l'interpolation spatiale ou l'interpolation temporelle doit être favorisée. Le résultat final est obtenu en pondérant les interpolations spatiales et temporelles en fonction du mouvement détecté.

Sur cette figure 1, le préfixe Y désigne la composante de luminance et les préfixes U et V désignent les composantes de chrominance d'une trame, le préfixe C désigne une trame courante, le préfixe P désigne une trame précédente, le préfixe PP désigne une trame immédiatement antérieure à ladite trame précédente, le suffixe « n » désigne une ligne « n » d'une trame, et le suffixe « n+1 » désigne une ligne suivante

Les composantes de luminance PY et PPY et de chrominance CU, PPU, CV et PPV d'une trame précédente P et d'une trame antérieure PP sont présentées en entrée d'un détecteur de mouvement 1.

Plus particulièrement, la composante de luminance PYₙ₊₁ d'une ligne suivante d'une trame antérieure P, la composante de luminance PPYn d'une ligne n d'une trame antérieure PP, obtenue au moyen d'une ligne à retard, telle que 2, ainsi que la composante de luminance PPYₙ₊₁ d'une ligne suivante d'une trame PP sont présentées en entrée du détecteur de mouvement 1.

En ce qui concerne les composantes de chrominance U et V, les composantes de chrominance d'une ligne n et d'une ligne suivante n+1 d'une trame courante C et d'une trame antérieure PP, c'est-à-dire les composantes CUn, CUₙ₊₁, PPUn, PPUₙ₊₁, CVn, CVₙ₊₁, PPVn et PPVₙ₊₁ sont également présentées en entrée du détecteur de mouvement 1.

La valeur du mouvement Mₙ₊₁, issue du détecteur de mouvement 1, ainsi que les valeurs de mouvement antérieures Mₙ et Mₙ₋₁, obtenues au moyen de lignes à retard, telles que 3, sont présentées en entrée d'un filtre 4 délivrant un coefficient de pondération TSW.

Par ailleurs, le signal de luminance CY d'une trame en cours, d'une ligne courante n+2 et de lignes antérieures n+1 et n, issues de lignes à retard correspondantes, telles que 5, fait l'objet d'un filtrage spatial au moyen d'un filtre 6 correspondant, de manière à obtenir une valeur de la luminance sur une fenêtre glissante. Une ligne à retard 7 permet de disposer, en sortie du filtrage spatial, des composantes YSpatₙ₊₁ et YSpatₙ sur deux lignes consécutives

Par ailleurs, les valeurs de luminance et de chrominance d'une trame en cours C et d'une trame antérieure PP sont présentées en entrée de filtres temporels respectifs, tels que 8.

Les valeurs filtrées des composantes de luminance et de chrominance YTempₙ, UTempₙ et VTemp_{Pn} sont présentées, avec la composante filtrée YSpatₙ et avec le coefficient de pondération TSW, à un étage mélangeur 9 pour fournir, en sortie, des composantes de luminance et de chrominance Youtₙ, Uoutₙ et Voutₙ pondérées selon le mouvement détecté.

Comme on le conçoit, de tels traitements sont relativement lourds à mettre en œuvre.

Tel est également le cas des divers traitements numériques qui peuvent être appliqués à des signaux vidéo tels que les traitements de séparation de luminance et de chrominance, les traitements de changement de résolution ou « rescaling », les traitements de désentrelacement, les traitements d'amélioration d'image subjectifs, tels que les traitements connus sous le terme LTI/CTI, DC...les traitements de gestion de couleurs.

Comme décrit précédemment en ce qui concerne la réduction du bruit récursif temporal, les divers traitements s'appliquent généralement sur une fenêtre glissante qui prend en compte un ensemble de pixels voisins.

Ces traitements mettent donc en œuvre des calculs itératifs et impliquent généralement l'utilisation de mémoires tampon pour conserver les composantes des lignes voisines, voire des trames précédentes.

Diverses solutions sont à ce jour utilisées pour mettre en œuvre des traitements du type précité sur des signaux numériques vidéo.

Il existe tout d'abord des solutions purement matérielles.

De telles solutions sont avantageuses dans la mesure où elles permettent d'obtenir de bonnes performances. Mais on conçoit que l'utilisation de moyens matériels rend le traitement non flexible et difficile à faire évoluer. En outre, l'utilisation de moyens matériels nécessite l'utilisation de codages bas niveau, tels que les codages connus sous le terme de RTL (« Register Transfer Level », en langue anglaise) qui sont relativement lourds à utiliser. Enfin, l'utilisation de moyens matériels nécessite l'utilisation d'une logique de commande câblée relativement difficile à concevoir et susceptible d'engendrer des erreurs.

Il existe, à côté des solutions matérielles, des solutions purement logicielles. De telles solutions sont relativement souples mais engendrent des coûts de réalisation prohibitifs.

Il existe enfin des solutions qui consistent à combiner les solutions matérielles et les solutions logicielles.

De telles solutions consistent essentiellement à prévoir des coprocesseurs combinés au moyen d'une architecture câblée. De tels coprocesseurs sont généralement complexes et incorporent chacun une logique de commande mettant en œuvre un accès direct à la mémoire (DMA) et présentent les mêmes inconvénients que ceux des solutions purement matérielles. Ils sont en outre difficiles à commander. Leur modélisation est également difficile à réaliser de sorte que, à la conception, leur performance est relativement difficile à prédire.

Le document US6029239A porte sur un système de communication pour téléphone portable ou pour modem. Cette architecture est organisée autour d'un processeur de flux de données DFP qui communique avec un microcontrôleur MCU, un processeur de signaux numériques DSP et un ensemble de blocs matériels. Le microcontrôleur MCU assure la programmation du processeur DFP pour le transfert des données et la programmation de la liste des tâches à exécuter par le processeur DSP. Les blocs matériels assurent soit des fonctions spécifiques ou sont utilisés pour accélérer les fonctions logicielles mises en œuvre par le processeur DSP. Le transfert de données est mis en œuvre par le processeur de flux de données DFP.

L'invention est définie par les revendications annexées.

Au vu de ce qui précède, selon un premier aspect, il est proposé un système de traitement de données numériques comprenant :
- un ensemble d'unités de traitement esclave destinées à l'exécution de fonctions élémentaires ;
- un module d'interconnexion destiné à communiquer avec un réseau de transfert de données et à transférer des données entre les unités de traitement, d'une part, et le réseau de transfert, d'autre part ; et
- une unité de commande du module d'interconnexion pour commander le transfert des données.

Selon une autre caractéristique de ce système, l'ensemble des unités de traitement comprend un ensemble d'unités programmables et un ensemble d'unités matérielles non programmables.

Dans un mode de réalisation, le système comporte en outre une mémoire partagée associée aux unités de traitement programmables.

En variante, la mémoire partagée est une mémoire interne aux unités de traitement programmables.

Selon encore une autre caractéristique du système de traitement de données numériques, le module d'interconnexion comprend des moyens pour désactiver les unités de traitement non sollicités.

Par exemple, le module d'interconnexion comprend des moyens pour insérer dans un signal transmis vers une unité de traitement un signal d'activité pour une transaction en cours, le système comportant des moyens pour désactiver les unités de traitement en l'absence du signal d'activité.

Dans un mode de réalisation, l'ensemble d'unités de traitement comprend des groupes d'unités de traitement esclaves à action non simultanée, le système comportant alors des moyens de multiplexage des unités de traitement esclaves desdits groupes.

Par exemple, le module d'interconnexion comprend des moyens pour insérer, dans un signal transmis vers chaque groupe d'unités de traitement, un signal de configuration dudit groupe.

Le système peut en outre comporter plusieurs groupes en parallèle d'ensembles d'unités de traitement associés chacune à une mémoire locale et à un module local d'interconnexion.

Dans un mode de mise en œuvre, les données sont des données multimédias.

Selon un autre aspect, il est également proposé un décodeur de signal de télévision satellite ou par câble, comprenant un système tel que défini ci-dessus.

Il est encore proposé, selon un autre aspect, un poste de télévision comprenant un système tel que défini ci-dessus.

Il est enfin proposé, selon la présente description, un procédé de traitement de données numériques, comprenant les étapes de transfert des données à traiter entre un réseau de transfert de données et un ensemble d'unités de traitement assurant l'exécution de fonctions élémentaires, sous le contrôle d'une unité de commande.

D'autres buts, caractéristiques et avantage d'un tel système et d'un tel procédé apparaîtront à l'examen de la description suivante, donnée uniquement à titre d'exemple non limitatif, et faite en référence aux dessins annexés, sur lesquels :
- la figure 1, dont il a déjà été fait mention, illustre l'architecture générale d'un exemple de procédé conventionnel de réduction de bruit temporel mis en œuvre au sein d'un processeur vidéo ;
- la figure 2 illustre l'architecture générale d'un système de traitement numérique de données conforme à l'invention ;
- la figure 3 illustre de manière détaillée l'architecture du système de la figure 2 ;
- la figure 4 montre un exemple de pilotage des unités de traitement esclaves ;
- la figures 5 illustre un exemple d'association d'unités de traitement esclaves ;
- la figure 6 montre une variante de réalisation d'un système de traitement de données numériques conforme à l'invention.

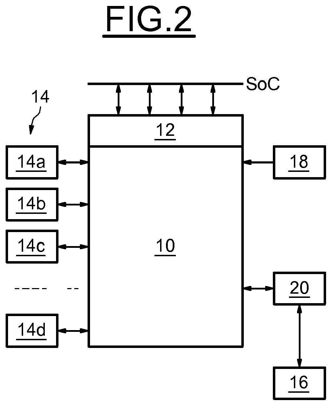

On va décrire, en référence à la figure 2, l'architecture générale d'un exemple de réalisation d'un système de traitement de données numériques.

Dans l'exemple de réalisation envisagé, ce système est destiné au traitement de pixels de données vidéo.

Mais, comme indiqué précédemment, on ne sort pas du cadre de la présente description lorsqu'un tel système est destiné au traitement de données d'autre nature, telles que des données audio. Dans ce cas, les traitements mis en œuvre s'appliquent sur des échantillons audio aux lieu et place de pixels de trames vidéo.

Comme on le voit, dans l'exemple de réalisation représenté, le système est destiné à communiquer avec un réseau de transfert de données de type réseau SoC ou « système sur puce » (« System-on-Chip », en langue anglaise).

Les traitements numériques mis en œuvre au sein d'un tel système peuvent être de diverses natures. Ils peuvent, par exemple, comme expliqué précédemment, consister à mettre en œuvre une réduction de bruit temporel, un filtrage 3D pour réaliser une séparation luminance/chrominance, un changement de résolution ou « rescaling », un désentrelacement, un traitement d'amélioration d'image subjectif, de type LTI/CTI, DCI, ..., un algorithme de gestion de couleurs, ..., ou, de manière générale, tout type de traitement vidéo s'appliquant à des pixels d'une image vidéo.

Comme on le voit sur la figure 2, l'architecture du système de traitement est fondée sur une séparation des moyens de commande qui servent au transfert de données reçues en provenance du réseau de transfert SoCet des moyens de traitement proprement dits, qui assurent le traitement des pixels reçus.

Le système comporte ainsi essentiellement : un module d'interconnexion 10 qui communique avec le réseau SoC par l'intermédiaire d'interfaces spécifiques 12 ; un ensemble d'unités de traitement esclaves, telles que 14 et 16, qui assurent chacune l'exécution de fonctions élémentaires sur un flux de pixels ; une unité de commande 18 qui assure la commande du transfert des données entre le réseau SoC, d'une part, et les unités de traitement 14 et 16, d'autre part ; et une mémoire embarquée 20 commune pour l'ensemble des unités de traitement.

Ainsi, le module d'interconnexion 10 ainsi que le module de commande 18 se chargent essentiellement du transfert des données vers les unités de traitement et de l'adressage des données dans la mémoire 20.

Par exemple, le module d'interconnexion 10 est réalisé autour d'un contrôleur de DMA optimisé pour une application vidéo et comprenant toutes les interfaces appropriées pour communiquer avec les unités de traitement 14 et 16.

En d'autres termes, le module d'interconnexion 10 constitue un moteur de transfert de données dont la fonction est essentiellement de transférer des pixels vers les unités de traitement et de recevoir des pixels en provenance de ces unités de traitement et ce, de préférence, avec une intervention minimale de l'unité de commande 18.

Les unités de traitement comportent, d'une part, un ensemble d'unités de traitement à base de moyens matériels essentiellement non programmables, référencées 14-a, 14-b, 14-c, ...14-n et un ensemble d'unités de traitement programmables, référencées 16.

En ce qui concerne les unités de commande non programmables 14-a, ..., 14-n, celles-ci effectuent l'essentiel des traitements intensifs sur les flux de pixels. Elles sont pour l'essentiel dépourvues de logique de commande câblée et réalisent une suite d'opérations en cascade sur les pixels incidents, telles que filtrage, addition, détection de contours, ...

Les unités de traitement programmables 16 réalisent des traitements plus occasionnels.

Elles sont destinées à être utilisées en complément des unités de traitement matériel pour procurer une flexibilité au système en fournissant des fonctions additionnelles. Elles sont par exemple destinées à être utilisées pour mettre en œuvre des tâches particulières et fines, qui ne peuvent être réalisées par les unités de traitement matériel 14.

Dans le mode de réalisation décrit sur cette figure 2, le transfert des données vers et en provenance des unités de traitement programmables s'effectue par l'intermédiaire de la mémoire commune 20.

Cette mémoire 20 est réalisée sous la forme d'une mémoire RAM. Elle intègre toutes les lignes à retard nécessaires pour mettre en œuvre les traitements vidéo et, en particulier, mettre en œuvre les traitements sur fenêtre glissante. Ainsi, outre le transfert des pixels vers les unités de traitement programmables, cette mémoire se charge des traitements mettant en œuvre des lignes à retard.

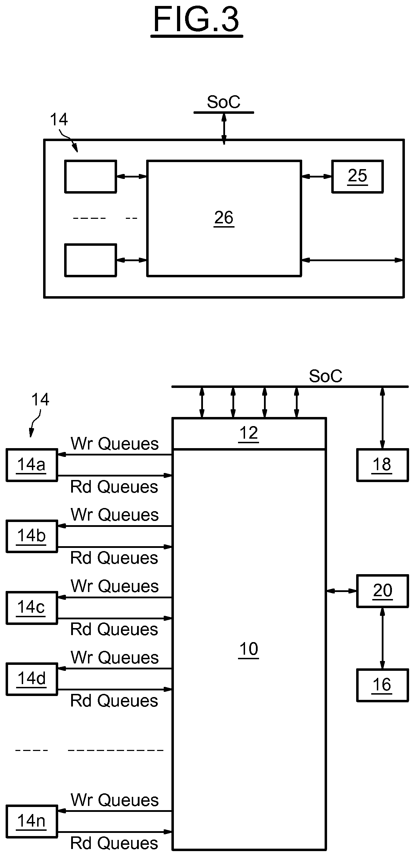

En se référant à la figure 3, les transfert des données entre le module d'interconnexion 10 et les unités de traitement 14a, ..., 14-n s'effectue sous la forme de files de transfert de données, soit du module 10 vers les unités de traitement 14 « *WRQueues* », soit des unités de traitement vers le module 10 « *RDQueues* ».

Mais on notera que, en ce qui concerne le traitement de signaux vidéo, les traitements mis en œuvre au sein des unités de traitement, et en particulier au sein des unités de traitement matériel, sont plus rapides que la fréquence des signaux vidéo eux-mêmes, même en haute définition.

Il a en effet été constaté qu'une fréquence de 75 Mhz était suffisante pour le traitement d'une ligne d'une trame de vidéo HD. Les unités de traitement, quant à elles, sont en mesure de traiter une fréquence de l'ordre de 350 Mhz.

C'est la raison pour laquelle, avantageusement, les unités de traitement sont utilisées pour réaliser plusieurs calculs en même temps et sont en mesure de recevoir plusieurs files de données en parallèle *WrQueues* et *RDQueues.* Elles peuvent également se charger de traiter en parallèle plusieurs flux de pixels pour délivrer, en sortie, un flux de pixels traités

Dans un mode de réalisation, le transfert de données entre le module d'interconnexion 10, d'une part, et les unités de traitement 14a,..., 14n, d'autre part, s'effectue selon un protocole de type « Hand Shake », c'est-à-dire un protocole selon lequel un émetteur s'assure qu'un récepteur est en état de recevoir des données avant de lui transférer. Un tel protocole est basé sur l'émission préalable d'une requête et sur la réception d'un signal de validation lors de transmission des données pour indiquer à l'émetteur de la requête que les données transmises sont valides.

Ainsi, pour la transmission de pixels vers les unités de traitement, le module d'interconnexion émet un signal de validation à destination d'une unité de traitement après réception, en provenance de cette dernière, d'une requête.

Au contraire, pour récupérer des pixels en provenance d'une unité de traitement, le module d'interconnexion 10 émet une requête vers cette unité puis récupère les pixels, les données reçues étant considérées comme valides dès que le signal valide est reçu.

Par ailleurs, outre les signaux de ce protocole « Hand shake », le module d'interconnexion transfère des signaux additionnels « *ActiveFlag* » et « *PixelFlag* » au cours du transfert des pixels pour, en particulier, gérer l'activation des unités de traitement, d'une part, et configurer leur mode de fonctionnement, d'autre part.

En premier lieu, le signal « *ActiveFlag* » est utilisé pour désactiver les unités de traitement qui ne sont pas utilisées. Ce drapeau est transmis avec le ou les premiers pixels transmis. Etant donné que les unités de traitement fonctionnent sous l'unique supervision du module d'interconnexion 10, dans le cas où une unité de traitement ne reçoit pas un tel drapeau, elle n'est pas utilisée et peut dès lors être inactivée.

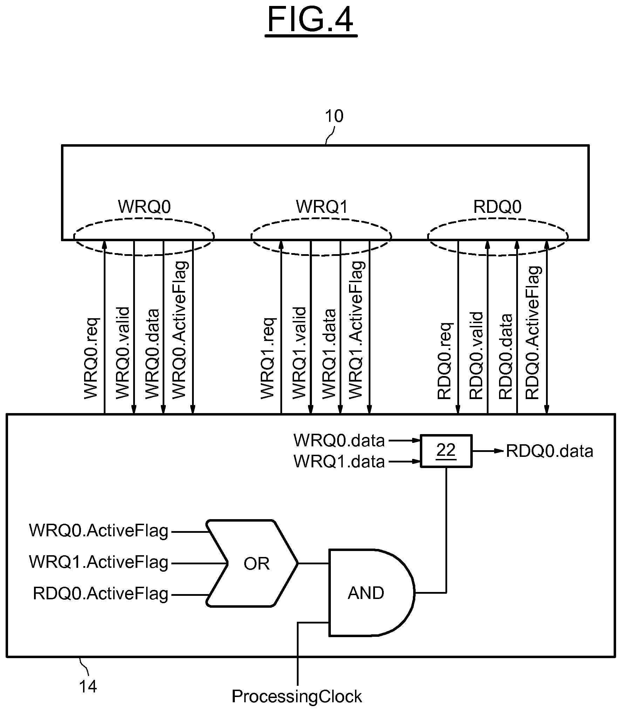

Sur la figure 4 on a représenté un exemple de mise en œuvre dans lequel une unité de traitement reçoit deux flux de pixels pour délivrer en sortie un flux de pixels traités.

Par exemple, le module d'interconnexion 10 transfère les signaux de lecture et d'écriture WRQ0, WRQ1 et RDQ0, en l'espèce les signaux WRQ0req, WRQ1req et RDQ0req, en ce qui concerne la requête de transfert de pixels, les signaux de pixels, ici WRQ0data, WRQ1data et RDQ0data, et les signaux de validation, ici WRQ0.valid, WRQ1.valid et RDQ0.valid.

Outre ces signaux, le module d'interconnexion 10 transmet les signaux d'activation pour chaque file de données, à savoir les signaux WRQ0.*ActiveFlag*, WRQ1*.ActiveFlag* et RDQ0*.ActiveFlag*, lesquels sont utilisés pour l'élaboration d'un signal d'horloge interne « *InternalProcessingClock* » pour le processeur interne 22 de l'unité de traitement.

Par exemple, une fonction logique OU (OR) est réalisée entre les drapeaux WRQ0.*ActiveFlag*, WRQ1*.ActiveFlag* et RDQ0*.ActiveFlag*, et une fonction logique ET (AND) est réalisée entre la sortie de la fonction OU et un signal d'horloge externe « *ProcessingClock* » pour élaborer le signal d'horloge interne « *InternalProcessingClock* ».

Par ailleurs, dans le but d'améliorer le nombre d'interfaces physiques nécessaires entre le module d'interconnexion et les unités de traitement, les unités de traitement qui ne travaillent pas de manière simultanée sont regroupées.

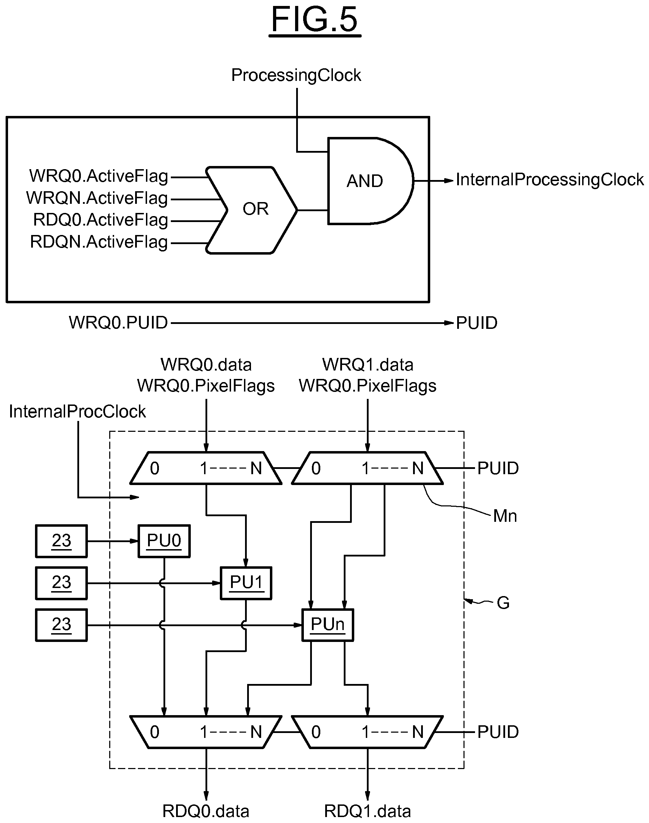

Comme on le voit sur la figure 5, on peut alors configurer des groupes, tels que G, d'unités de traitement, qui sont elles-mêmes susceptibles d'échanger une ou plusieurs files de données.

Dans l'exemple de réalisation illustré à la figure 5, le groupe d'unités de traitement comporte un nombre quelconque n d'unités de traitement PU0,...,PUn. Dans ce cas, outre les drapeaux « ActiveFlag » WRQ0.*ActiveFlag*,..., WRQN.*ActiveFlag*, et RDQ0*.ActiveFlag*,..., RDQN*.ActiveFlag* destinés à l'élaboration du signal d'horloge interne « *InternalProcessingClock* », comme mentionné précédemment, le flux de données échangées avec les unités de traitement incorpore un paramètre de configuration *PUID* de chaque unité de traitement.

Ainsi, par exemple, le signal de configuration PUID peut être positionné à 1 pour configurer le groupe d'unités de traitement en tant qu'additionneur ou à 1 pour configurer le groupe d'unités de traitement en tant que multiplicateur.

Comme illustré sur la figure 5, le groupe d'unités de traitement sélectionne de manière arbitraire le signal de configuration porté par l'une des files qu'il reçoit, par exemple la file WRQ0.

Chaque unité de traitement PU0, PU1, ...PUn est associée, en entrée et en sortie, à un multiplexeurs M1, ..., Mn, lui-même commandé par le signal de configuration « PUID » élaboré à partir d'un paramètre WRQ0.PUID transféré avec les pixels afin de commander, conjointement avec des registres de commande telles que 23 des unités de traitement, le mode de fonctionnement du groupe d'unités de traitement.

On notera qu'il est également possible de regrouper les unités de traitement afin de simplifier la programmation, d'obtenir un gain en puissance. Par exemple, les ressources spécifiques pour un algorithme donné sont regroupées. On peut ainsi, comme illustré à la figure 3, associer, en parallèle, plusieurs unités de traitement qui sont associées elles-mêmes à des modules d'interconnexion locaux 26 et à une mémoire locale 25.

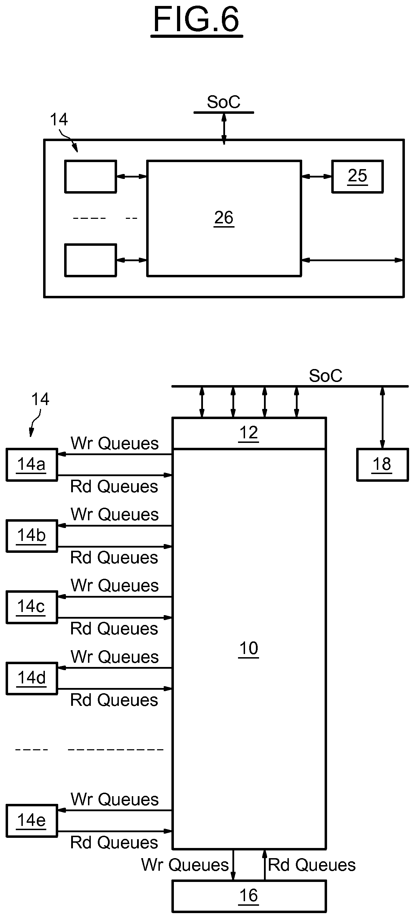

On notera que dans les divers modes de réalisation envisagés, le transfert de données du module d'interconnexion vers les unités de traitement programmables 16 s'effectue par l'intermédiaire de la mémoire RAM embarquée. Il est également possible, en variante, comme visible sur la figure 6, au lieu d'utiliser la mémoire partagée, d'utiliser une mémoire interne à chaque unité de traitement 16.

Il est également possible, en variante, de transférer directement les données vers les unités de traitement programmables en utilisant un protocole de transfert de données fondé sur l'utilisation de requêtes et de signaux de validation, similaire au protocole utilisé pour le transfert des données du module d'interconnexion vers les unités de traitement matérielles.

Un tel mode de réalisation est intéressant dans la mesure où il permet d'obtenir une homogénéité entre les unités de traitement matérielles et les unités de traitement programmables, et d'améliorer la synchronisation des unités de traitement programmables dans la mesure où le transfert des données s'effectue directement, sans passer par la mémoire RAM.

On notera cependant que cette variante présente un inconvénient relatif au fait que la souplesse est réduite dans la mesure où le flux de données transmis vers les unités de traitement 16 est alors fixe.

## Revendications

1. Système de traitement de données numériques comprenant :
- un ensemble d'unités de traitement esclaves (14, 16) pour l'exécution de fonctions élémentaires ;
- un module d'interconnexion (10) qui est destiné à communiquer avec un réseau de transfert de données (SoC) par l'intermédiaire d'interfaces spécifiques (12) et à transférer des données entre les unités de traitement, d'une part, et le réseau de transfert de données, d'autre part ; et
- une unité (18) de commande du module d'interconnexion pour commander ledit transfert de données, et en ce que l'ensemble d'unités de traitement comprend un ensemble (16) d'unités de traitement programmables et un ensemble (14) d'unités de traitement matérielles non programmables (14a, ... , 14n), où lesdites unités de traitement matérielles non programmables sont configurées pour réaliser plusieurs calculs en même temps,
où le transfert de données entre le module d'interconnexion (10) et les unités de traitement matérielles non programmables (14a, 14n) s'effectue sous la forme de files de transfert de données (Wr Queues, Rd Queues) en parallèle.

2. Système selon la revendication 1, **caractérisé en ce qu'**il comporte une mémoire partagée (20) associée aux unités de traitement programmables.

3. Système selon la revendication 1, **caractérisé en ce que** la mémoire partagée est une mémoire interne aux unités de traitement (16).

4. Système selon l'une quelconque des revendications 1 à 3, **caractérisé en ce que** le module d'interconnexion comprend des moyens pour désactiver les unités de traitement esclaves non sollicitées.

5. Système selon la revendication 4, **caractérisé en ce que** le module d'interconnexion comprend des moyens pour insérer dans un signal transmis vers une unité de traitement esclave un signal d'activité (*ActiveFlag*) pour une transaction en cours, et **en ce qu'**il comprend des moyens pour désactiver les unités de traitement en l'absence du signal d'activité.

6. Système selon l'une quelconque des revendications 1 à 5, **caractérisé en ce que** l'ensemble d'unités de traitement esclaves comprend des groupes d'étages esclaves (G) à action non simultanée de plusieurs files de données, et un ensemble d'unités de traitement programmables (16) fournissant des fonctions additionnelles, et **en ce qu'**il comporte des moyens de multiplexage des unités de traitement esclaves desdits groupes.

7. Système selon la revendication 6, **caractérisé en ce que** le module d'interconnexion comprend des moyens pour insérer, dans un signal transmis vers chaque unité de traitement esclave, un signal de configuration (PUID) dudit groupe.

8. Système selon l'une quelconque des revendications 1 à 7, **caractérisé en ce qu'**il comporte plusieurs groupes en parallèle d'ensembles d'unités de traitement esclaves associés chacun à une mémoire locale (25) et à un module d'interconnexion local (26).

9. Système selon l'une quelconque des revendications 1 à 8, **caractérisé en ce que** les données sont des données multimédias.

10. Décodeur de signaux de télévision satellite, **caractérisé en ce qu'**il comporte un système selon l'une quelconque des revendications 1 à 9.

11. Poste de télévision, **caractérisé en ce qu'**il comporte un système selon l'une quelconque des revendications 1 à 9.

12. Procédé de traitement de signaux numériques comprenant les étapes de transfert de données à traiter entre un réseau de transfert de données (SoC) et un ensemble d'unités de traitement esclaves (14, 16), via un module d'interconnexion et par l'intermédiaire d'interfaces spécifiques, chaque unité de traitement assurant l'exécution de fonctions élémentaires sous le contrôle d'unités de commande,
dans lequel l'ensemble des unités de traitement comprend un ensemble d'unités de traitement programmables et non programmables, ledit ensemble d'unités de traitement matérielles non programmables (14, ..., 14n) réalisant plusieurs calculs en même temps, et dans lequel le transfert de données à partir ou vers les unités de traitement matérielles non programmables (14a, ..., 14n) s'effectue sous la forme de files de transfert de données (Wr Queues, Rd Queues) en parallèle.

## Patentansprüche

1. System zur Verarbeitung von digitalen Daten, umfassend:
- eine Anordnung von Slave-Verarbeitungseinheiten (14, 16) zur Ausführung von elementaren Funktionen;
- ein Verbindungsmodul (10), das dazu bestimmt ist, mit einem Datentransfernetzwerk (SoC) mittels spezifischer Schnittstellen (12) zu kommunizieren und Daten zwischen den Verarbeitungseinheiten einerseits und dem Datentransfernetzwerk andererseits zu übertragen; und
- eine Steuereinheit (18) des Verbindungsmoduls zum Steuern des Datentransfers und dadurch, dass die Anordnung von Verarbeitungseinheiten eine Anordnung (16) von programmierbaren Verarbeitungseinheiten und eine Anordnung (14) von nicht programmierbaren Hardware-Verarbeitungseinheiten (14a, ..., 14n) umfasst,
wobei die nicht programmierbaren Hardware-Verarbeitungseinheiten dazu ausgestaltet sind, mehrere Berechnungen gleichzeitig auszuführen,
wobei der Datentransfer zwischen dem Verbindungsmodul (10) und den nicht programmierbaren Hardware-Verarbeitungseinheiten (14a, 14n) in Form von Datentransferwarteschlangen (Wr Queues, Rd Queues) parallel erfolgt.

2. System nach Anspruch 1, **dadurch gekennzeichnet, dass** es einen gemeinsam genutzten Speicher (20) umfasst, der den programmierbaren Verarbeitungseinheiten zugeordnet ist.

3. System nach Anspruch 1, **dadurch gekennzeichnet, dass** der gemeinsam genutzte Speicher ein interner Speicher der Verarbeitungseinheiten (16) ist.

4. System nach einem der Ansprüche 1 bis 3, **dadurch gekennzeichnet, dass** das Verbindungsmodul Einrichtungen zum Deaktivieren der nicht beanspruchten Slave-Verarbeitungseinheiten umfasst.

5. System nach Anspruch 4, **dadurch gekennzeichnet, dass** das Verbindungsmodul Einrichtungen zum Einfügen eines Aktivitätssignals (ActiveFlag) für eine laufende Transaktion in ein zu einer Slave-Verarbeitungseinheit übertragenes Signal umfasst und dass es Einrichtungen zum Deaktivieren der Verarbeitungseinheiten bei Fehlen des Aktivitätssignals umfasst.

6. System nach einem der Ansprüche 1 bis 5, **dadurch gekennzeichnet, dass** die Anordnung von Slave-Verarbeitungseinheiten Slave-Stufengruppen (G) mit nicht gleichzeitiger Aktion von mehreren Datenwarteschlangen und eine Anordnung von programmierbaren Verarbeitungseinheiten (16), die Zusatzfunktionen bereitstellt, umfasst und dass sie Einrichtungen zum Multiplexen der Slave-Verarbeitungseinheiten der Gruppen umfasst.

7. System nach Anspruch 6, **dadurch gekennzeichnet, dass** das Verbindungsmodul Einrichtungen zum Einfügen eines Konfigurationssignal (PUID) der Gruppe in ein zu jeder Slave-Verarbeitungseinheit übertragenes Signal umfasst.

8. System nach einem der Ansprüche 1 bis 7, **dadurch gekennzeichnet, dass** es mehrere parallele Gruppen von Anordnungen von Slave-Verarbeitungseinheiten umfasst, die jeweils einem lokalen Speicher (25) und einem lokalen Verbindungsmodul (26) zugeordnet sind.

9. System nach einem der Ansprüche 1 bis 8, **dadurch gekennzeichnet, dass** die Daten Multimediadaten sind.

10. Satellitenfernsehsignaldecoder, **dadurch gekennzeichnet, dass** er ein System nach einem der Ansprüche 1 bis 9 umfasst.

11. Fernsehgerät, **dadurch gekennzeichnet, dass** es ein System nach einem der Ansprüche 1 bis 9 umfasst.

12. Verfahren zur Verarbeitung von digitalen Signalen, umfassend die Schritte des Transfers von zu verarbeitenden Daten zwischen einem Datentransfernetzwerk (SoC) und einer Anordnung von Slave-Verarbeitungseinheiten (14, 16) über ein Verbindungsmodul und mittels spezifischer Schnittstellen, wobei jede Verarbeitungseinheit die Ausführung von elementaren Funktionen unter der Kontrolle von Steuereinheiten gewährleistet,
wobei die Anordnung der Verarbeitungseinheiten eine Anordnung von programmierbaren und nicht programmierbaren Verarbeitungseinheiten umfasst, wobei die Anordnung von nicht programmierbaren Hardware-Verarbeitungseinheiten (14, ..., 14n) mehrere Berechnungen gleichzeitig ausführt, und wobei der Datentransfer von oder zu den nicht programmierbaren Hardware-Verarbeitungseinheiten (14a, ..., 14n) in Form von Datentransferwarteschlangen (Wr Queues, Rd Queues) parallel erfolgt.

## Claims

1. System for processing digital data comprising:
- a set of slave processing units (14, 16) for the execution of elementary functions;
- an interconnection module (10) which is designed to communicate with a data transfer network (SoC) via specific interfaces (12) and to transfer data between the processing units, on the one hand, and the data transfer network, on the other hand; and
- a unit (18) for controlling the interconnection module in order to control the said data transfer, and in that the set of processing units comprises a set (16) of programmable processing units and a set (14) of unprogrammable hardware processing units (14a, ..., 14n), where the said unprogrammable hardware processing units are configured to carry out several computations at the same time,
where the transfer of data between the interconnection module (10) and the unprogrammable hardware processing units (14a, 14n) is carried out in the form of data transfer queues (Wr Queues, Rd Queues) in parallel.

2. System according to Claim 1, **characterized in that** it comprises a shared memory (20) associated with the programmable processing units.

3. System according to Claim 1, **characterized in that** the shared memory is a memory internal to the processing units (16).

4. System according to any one of Claims 1 to 3, **characterized in that** the interconnection module comprises means for disabling the slave processing units that are not in demand.

5. System according to Claim 4, **characterized in that** the interconnection module comprises means for inserting into a signal transmitted to a slave processing unit an active flag for a transaction in progress, and **in that** it comprises means for disabling the processing units if there is no active flag.

6. System according to any one of Claims 1 to 5, **characterized in that** the set of slave processing units comprises groups of slave stages (G) with non-simultaneous action of several data queues, and a set of programmable processing units (16) providing additional functions, and **in that** it comprises means for multiplexing the slave processing units of the said groups.

7. System according to Claim 6, **characterized in that** the interconnection module comprises means for inserting, into a signal transmitted to each slave processing unit, a configuration signal (PUID) of the said group.

8. System according to any one of Claims 1 to 7, **characterized in that** it comprises several groups in parallel of sets of slave processing units each associated with a local memory (25) and with a local interconnection module (26).

9. System according to any one of Claims 1 to 8, **characterized in that** the data are multimedia data.

10. Satellite television signal decoder, **characterized in that** it comprises a system according to any one of Claims 1 to 9.

11. Television set, **characterized in that** it comprises a system according to any one of Claims 1 to 9.

12. Method for processing digital signals comprising the steps of transferring data to be processed between a data transfer network (SoC) and a set of slave processing units (14, 16), via an interconnection module and using specific interfaces, each processing unit executing elementary functions under the control of control units in which the set of processing units comprises a set of programmable and unprogrammable processing units, the said set of unprogrammable hardware processing units (14, ..., 14n) carrying out several computations at the same time, and in which the transfer of data from or to the unprogrammable hardware processing units (14a, ..., 14n) is carried out in the form of data transfer queues (Wr Queues, Rd Queues) in parallel.
